# EUROPEAN PATENT SPECIFICATION

(11) **EP 2 007 537 B1**
(45) Date of publication and mention of the grant of the patent: **24.03.2010**
(21) Application number: 07755369.1
(22) Date of filing: 12.04.2007
(51) Int. Cl.: B22F 7/06, F16C 7/02, B22F 5/00

(54) **MULTI-MATERIAL CONNECTING ROD**
PLEUELSTANGE FÜR MEHRERE MATERIALIEN
BIELLE CONSTITUÉE DE MATÉRIAUX MULTIPLES

(30) Priority: 13.04.2006 US 403621
(43) Date of publication of application: 31.12.2008
(73) Proprietor: GKN Sinter Metals Inc., Germantown, WI 53022 (US)
(72) Inventor: GEIMAN, Timothy, E., South Lyon, MI 48178 (US); MANDEL, Joel, H., Hartford, WI 53027 (US); PHILLIPS, Donald, J., Menomonee Falls, WI 53051 (US); MARRA, Michael, P., Allen Park, MI 48101 (US)
(74) Representative: Maxton Langmaack & Partner
(86) International application number: PCT/US2007/009069
(87) International publication number: WO 2007/120790

(56) References cited:
- GB-A- 2 233 000
- US-A1- 2004 134 306
- US-A1- 2005 262 962

## Description

### CROSS-REFERENCES TO RELATED APPLICATIONS

This application claims priority from United States Patent Application No. 11/403,621 filed April 13, 2006.

### STATEMENT REGARDING FEDERALLY SPONSORED RESEARCH

Not Applicable.

### BACKGROUND OF THE INVENTION

### 1. Field of the Invention

This invention relates to connecting rods, for example of the type used in reciprocating piston engines, and in particular to connecting rods that are made of powder metal, whether forged or not.

### 2. Description of the Related Art

Connecting rods used in reciprocating piston and internal combustion engines have great stresses imposed upon them in operation of the engine and therefore must be very strong, and preferably of light weight. Sufficiently strong and lightweight metal materials are typically also very hard. In the case of connecting rods, the ends of the connecting rod must be machined for the bearing bores, one for the crank pin and the other for the wrist pin of the piston, and also typically the crank end of the connecting rod also must be drilled and tapped so as to secure the crankshaft cap section of the connecting rod to the remainder of the connecting rod. Forming the connecting rod with traditional materials that possess the required combination of strength and weight has resulted in difficult machining of the connecting rod, and in particular in increased wear and tear on the tools and tooling used in the machining operations. Hence, the typical solution in prior art connecting rods was to compromise strength and weight for machinability.

In US 2004/0134306 A1, a bi-material connecting rod is disclosed with a shank, a crank end and a pin end. The crank end and/or the pin end may be made of powder-metal materials different from the shank material, where the crank end material exhibits lower strength and higher machinability than the shank and/or pin end. The material transition zone between the crank end and the shank has a zigzagged interface for providing a desired interlocking strength between the materials forming crank end and shank.

According to GB 2 233 000 A, a connecting rod exhibits a big end portion and a small end portion, the latter including a hole and a shank portion. The portion around the hole for receiving a shaft is made of the same material as the shank.

US 2005/0262962 A1 describes a connecting rod, in which the shank, the crank end, and the piston end are formed of the same alloy. Openings are provided for receiving a wrist pin and the shaft portion of a crankshaft. The crank support surface and the wrist pin support surface are formed of different alloys than the rest of the crank end and the piston end, respectively.

Thus, there is a need for an improved connecting rod having acceptable machinability without reduced strength.

### SUMMARY OF THE INVENTION

The invention provides an integral multi-material powder metal connecting rod according to claim 1 with localized regions of high strength and high machinability materials tailored to match to product performance demands within the connecting rod. The shank or central beam section of the connecting rod is made of one powder metal material of a relatively high strength and the ends are made of one or more powdered metal materials that are more machinable. Thus, the central beam section, which is typically where the highest stresses tend to occur, is of high strength material to resist such stresses, and the ends are made from lower strength material so as to be more machinable, but still of a requisite strength. As used herein, machinability refers to the relative ease of machining a metal, and various machinability indexes are well known that provide a relative measure of the machinability of an engineering material under specified standard conditions.

These and other features, aspects, and advantages of the present invention will become better understood upon consideration of the following detailed description, drawings, and appended claims.

### BRIEF DESCRIPTION OF THE DRAWINGS

Figure 1 is a perspective view of a connecting rod that incorporates the invention.

Figure 2 is a perspective view of a test sample made to evaluate a connecting rod that incorporates the invention.

Figure 3 is a perspective view of a feedbox having three chambers to fill a die to make the test piece of Figure 2.

Figure 4 is a perspective view showing the shuttle section of the feeder for making the test piece of Figure 2.

Figure 5 is a perspective view showing test pieces like in Figure 2 after compaction.

Figures 6A-C are views of the test piece with Figure 6A a top perspective view, Figure 6B the test piece after being cut longitudinally, and Figure 6C a side view of the cut section.

### DETAILED DESCRIPTION OF THE INVENTION

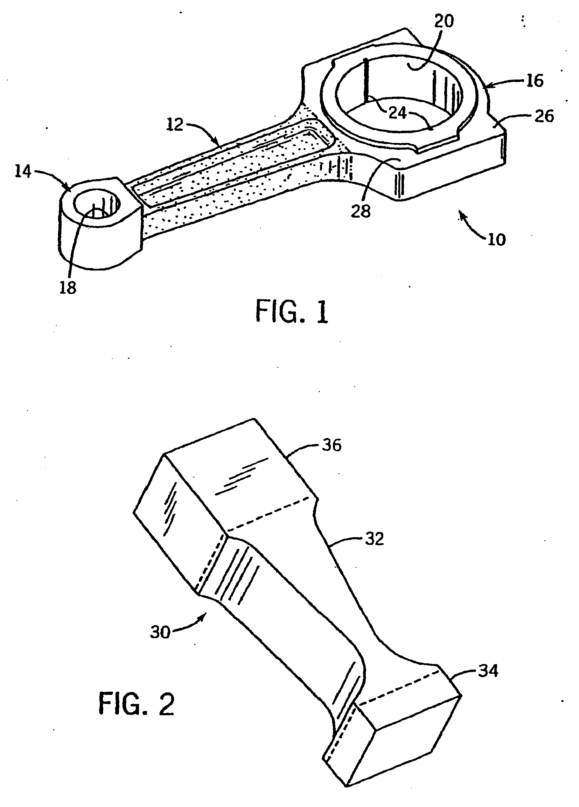

Referring to Figure 1, a connecting rod 10 of the invention has a central beam section 12 having at a first end thereof an integrally connected piston end 14 and at the opposite second end thereof an integrally connected crank end 16. By "integrally connected", we mean the central beam section 12, the piston end 14 and the crank end 16 are formed as a unit. The piston end 14 has a smaller bore 18 therethrough for receiving the wrist pin (and bearing if applicable) of a piston (not shown), and the crank end 16 has a larger bore 20 therethrough for receiving a journal of a crank shaft and a bearing (not shown). The crank end 16 can also be provided with opposed notches 24 at the sides of the bore 20 which concentrate the stress so that the crankshaft cap portion 26 of the end 16 can be separated by fracture splitting from the base portion 28 of the end 16, which creates an interface between the cap and the remainder of the connecting rod that allows refitting of the cap to the remainder with high positional accuracy. Longitudinal bores, generally parallel with the beam section 12, are bored into the bearing cap 26 and base 28 on opposite sides of the bore 20 from the crank end 16, and the bores in the base 28 may also be tapped so that bolts with or without nuts can be used to secure the crankshaft cap 26 to the base 28 after they are fracture separated. U.S. Patent Application Publication No. 2004/0074335 shows an example of the use of bolts to connect a crankshaft cap to the crank end base of a connecting rod.

The beam section 12 is made of one or more powder metal materials, and the piston end 14 and the crank end 16 are made of one or more different powder metal material(s). For example, current powder metal connecting rods are made of a powder metal material which is machinable, thus sacrificing strength and hardness. In a connecting rod of the invention, the beam section 12 is made of a powder metal material which is stronger and harder, and therefore less machinable, than the normal powder metal material currently used for connecting rods. The piston end 14 and the crank end 16 are made of a powder metal material that is relatively more machinable than the beam section 12, and may be the same, more or less machinable than the current powder metal material being used for connecting rods. Also, the powder metal material of the piston end 14 may be different from the powder metal material of the crank end 16, or it may be the same material.

In one form, the beam section 12 is made of a steel powder material including iron (typically at least 90 wt.%), nickel 1.75-2.00 wt.%, molybdenum 0.50-0.60 wt.%, manganese 0.10-0.25 wt.%, and carbon 0.10-0.90 wt.%. In a preferred form, the beam section 12 is made of MPIF (Metal Powder Industries Federation) P/F-4660 Modified low alloy steel material which has iron, nickel 1.75-2.00 wt.%, molybdenum 0.50-0.60 wt.%, manganese 0.10-0.25 wt.%, and carbon (as graphite approximately 0.60 wt.%). In one form, both the piston end 14 and the crank end 16 are made of the same material, which is a steel powder material including iron (typically at least 90 wt.%), copper 1.8-2.2 wt.%, manganese sulfide 0.3-0.5 wt.%, manganese 0.10-0.25 wt.%, and carbon 0.30-0.70 wt.%. In one form, both the piston end 14 and the crank end 16 are made of MPIF P/F-11C60, which is a copper steel powder metal material suitable for connecting rods, thus quite machinable. MPIF P/F-11C60 includes iron, copper 1.8-2.2 wt.%, manganese sulfide 0.3-0.5 wt.%, manganese 0.10-0.25 wt.%, and carbon (as graphite approximately 0.60 wt.%).

The hardness of MPIF P/F-4660 Modified in the preferred finished part is approximately HRC 45 (and may be in the range of HRC 40-50), and the hardness of MPIF P/F-11C60 in the preferred finished part is approximately HRC 25 (and may be in the range of HRC 20-30). The tensile strength of MPIF P/F-4660 Modified in the preferred finished part is approximately 1650 MPa (and may be in the range of 1400-1900 MPa), and the tensile strength of MPIF P/F-11C60 in the preferred finished part is approximately 900 MPa (and may be in the range of 700-1100 MPa). Most current connecting rods fail primarily in the beam section, and therefore the beam section 12 is of increased strength. The piston end 14 and the crank end 16 need to be a softer material to allow machining of the bores 18 and 20, and also for drilling and/or tapping of the crank end bolt holes. Preferably, the sintered material of the piston end 14 and the crank end 16 is of uniform composition throughout the piston end 14 and the crank end 16.

In one example embodiment, the density of MPIF P/F-4660 Modified in the preferred finished part is approximately 7.80 g/cc (about 99% theoretical density) and the density of MPIF P/F-11C60 in the preferred finished part is approximately 7.80g/cc (about 99% theoretical density). Theoretical densities above 95% are preferred. In another example embodiment, the density of MPIF P/F-4660 Modified in the beam section 12 of the preferred finished connecting rod 10 is approximately 7.80 g/cc, and the density of MPIF P/F-11C60 in the piston end 14 and the crank end 16 of the preferred finished connecting rod 10 is below 7.80g/cc. In this example embodiment, the lower density in the piston end 14 and the crank end 16 allows for greater machinability of the piston end 14 and the crank end 16. Lower densities in the sintered material of the piston end 14 and the crank end 16 can be achieved by use of a metal powder with larger particle sizes in forming the piston end 14 and the crank end 16 compared to the metal powder used in forming the beam section 12. Also, lower densities in the sintered material of the piston end 14 and the crank end 16 can be achieved by use of a lower powder compaction pressures in forming the piston end 14 and the crank end 16 compared to the compaction pressures used in forming the beam section 12 of the connecting rod 10.

In yet another example embodiment, the beam section 12 has a first zone comprising a first chemical composition and a second zone comprising another chemical composition different from the first chemical composition. This allows for tailoring of the tensile strength and/or hardness of the beam section 12. Also, the first zone may have a first density and the second zone may have a density different from the first density in order to further tailor the tensile strength and/or hardness of the beam section 12.

Tools were developed to evaluate the concept of a dual material connecting rod. The tools that were developed were based on tooling used to make flexural fatigue bars. The actual test sample part 30 is shown in Figure 2, and has a large end 36, a small end 34, and a beam section 32 integrally connecting the ends 34 and 36. Dashed lines show the approximate boundary between the end material and the beam material. In Figure 1, the boundary is shown because the beam section 12 is darker in color than the end sections 14 and 16.

Along with the experimental tools, a new feeder was designed and built. The experiment was performed on a 500 ton Alpha compaction press.

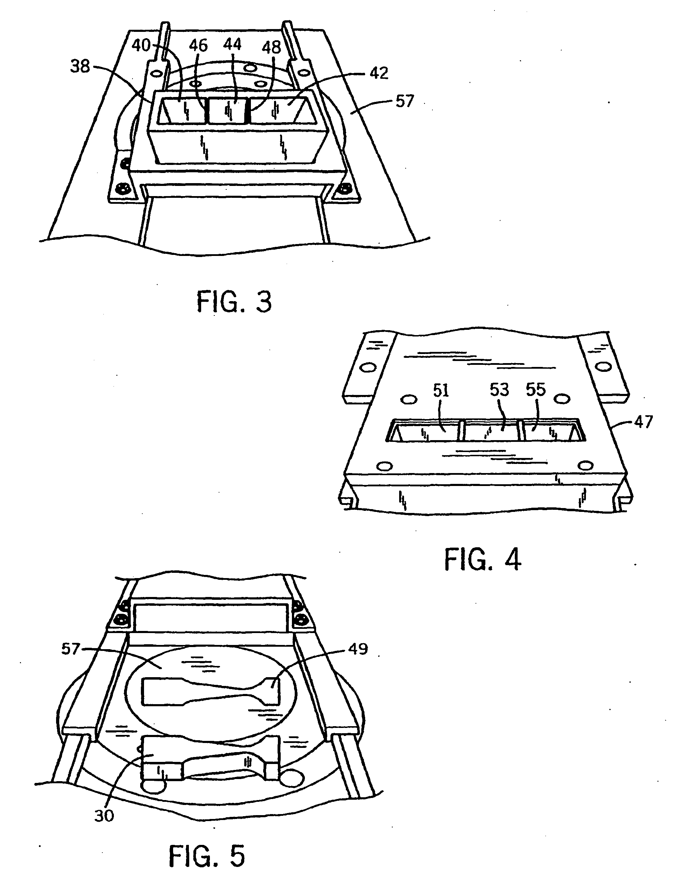

Referring to Figures 3-5, the feeder that was built included a feed box 38 with three chambers 40, 42, 44, each separated from the next by a dividing wall 46 or 48, and used the shuttle feed concept which is common in the sintered powder metal molding art. The two end chambers 40 and 42 of the feedbox contained MPIF P/F 11C60 powder metal material, and the middle chamber 44 (separated from chamber 40 by wall 46 and separated from chamber 42 by wall 48) contained the MPIF P/F 4660 Modified material.

The feed system was installed onto the press and three initial samples were made. Figure 3 shows the feedbox 38 with the three chambers 40, 42 and 44, looking at the feed system from the back. Figure 4 shows the shuttle section 47 of the feeder, which is the part that travels from the feedbox 38 to the die 49, and delivers the powder to the die 49, looking at the feed system from the front of the press. Figure 5 shows the part 30 after compaction, on the die table next to the die 49 (die 49 is shown in eject position, with the top face of the die level with the surrounding table) after being compacted and ejected. Compartments 51, 53, 55 of the shuttle section 47 are filled when they go under the respective compartments 42, 44, 40. The shuttle section 47 travels from there to over the die 49 to fill it from the bottom of the three compartments 51, 53, 55, and then the die table 57 lifts up, creating the die voids beneath the shuttle section 47. This motion creates a suction under the compartments 51, 53, 55 so as to provide a suction fill, to thereby keep the powder metal material in columns as the press moves into the fill position, without significant intermixing at the powder to powder interface between the end sections and the beam section, which is desirable for the success of multi-material connecting rods. Should hard MPIF P/F 4660 Modified material contaminate the ends of the connecting rod, the part would be non-machinable, or at best difficult to machine, and would cause severe cutting tool damage resulting in a high cost penalty.

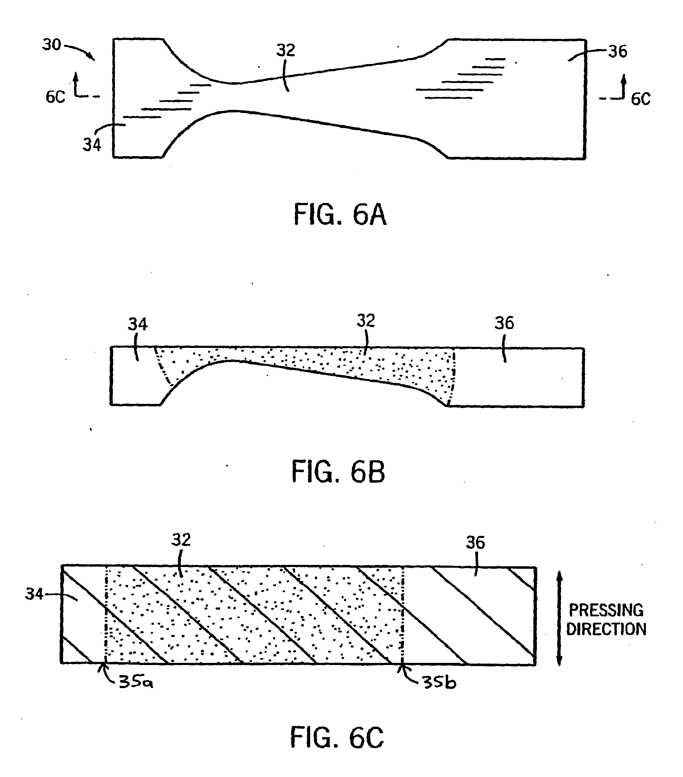

Samples were produced using the feed system and the Alpha press. After compaction the parts were sintered and inspected for material distribution. This was done by etching a sectioned part. Etching caused the MPIF P/F 4660 Modified material to darken heavily and made the material distribution easy to distinguish. Figures 6A-C show three views of the resulting parts. Figure 6C illustrates a section of a sample viewed at the cut section so that the direction of pressing would be vertical relative to this photo. The MPIF P/F 4660 Modified material etches darker, and is distributed in a uniform columnar fashion. Figure 6B shows the top view of the test part and Figure 6A is a top view of the whole part.

Other means of filling the die may also be employed to make a multi-material connecting rod. For example, the powder to powder boundaries between the beam and end sections of the connecting rod could be defined by thin plates in the tool set or feeder box to keep the material in the three sections separate from one another as the die is filled. Then, after the die is filled, the plates could be retracted, allowing the powder metal material of adjacent sections to come into contact with each other. This apparatus produces a smooth material interface between the ends and the beam section as described below. Alternatively, by using a progressive pressing technique, the two end sections of the connecting rod could be lightly compacted just enough to retain their forms, and then the middle (beam) material could be placed into the cavity created prior to final compaction. In any event, it is desirable to keep the material of the ends separate from the material of the beam section in the finished connecting rod. In other words, a smooth, preferably straight, interfacial line (see 35a in Figure 6C) can be seen in a longitudinal cross-sectional view of the transition area between the sintered material of the piston end and the sintered material of the central beam section. Likewise, a smooth, preferably straight, interfacial line (see 35b in Figure 6C) can be seen in a longitudinal cross-sectional view of the transition area between the sintered material of the crank end and the sintered material of the central beam section. The smooth (and preferably straight) material interface between the sintered material of the crank end and the sintered material of the central beam section and between the sintered material of the piston end and the sintered material of the central beam section provides for more uniform properties In the connecting rod and avoids material of the beam section from contaminating the ends of the connecting rod which would make the ends less machinable.

A connecting rod and a test part exemplifying the invention have been described in considerable detail. Many modifications and variations to the preferred embodiment described will be apparent to persons of ordinary skill in the art. For example, different materials could be used for the beam section or for the end sections, and the end sections themselves could be of different materials. Also, there could be any number of different sections, for example, the center beam section could itself have sections of different materials or densities. In addition, the part could be sintered powder metal (P/M) material or powder forged (P/F) material, and as used herein the term "powder metal" or "sintered material" includes powder metal material whether it is forged or not (for example if it was only sintered). Further, the beam section could be made of an air hardening powder metal material, or not, and the end sections could be of non-air hardening powder metal material, or not. An example air-hardening powder metal material is a powder steel containing sufficient carbon and other alloying elements to harden fully during cooling in air or other gaseous mediums from a temperature above its transformation range. Such steels attain their martensitic structure without going through the quenching process. Additions of chromium, nickel, molybdenum and manganese are effective toward this end.

Therefore, the invention should not be limited to the preferred embodiment described, but should be defined by the claims which follow.

### INDUSTRIAL APPLICABILITY

The invention relates to connecting rods, for example of the type used in reciprocating piston engines.

## Claims

1. A connecting rod (10) comprising:
a central beam section (12) comprising a first sintered material having a first chemical composition, the first sintered material having a first tensile strength, and the first sintered material having a first machinability;
a first end (14) integrally connected to the beam section; and
a second end (16) integrally connected to the beam section opposite the first end, the second end comprising a second sintered material uniform throughout the second end, the second sintered material having a second chemical composition different from the first chemical composition, the second sintered material having a second tensile strength lower than the first tensile strength, and the second sintered material having a second machinability higher than the first machinability,
wherein a material interface between the first sintered material of the beam section (12) and the second sintered material of the second end (16) is smooth,
wherein the first sintered material has a first density,
wherein the second sintered material has a second density different from the first density, and
wherein the first end (14) comprises a third sintered material uniform throughout the first end, the third sintered material having a third chemical composition different from the first chemical composition, the third sintered material having a third density different from the first density, the third sintered material having a third tensile strength lower than the first tensile strength, and the third sintered material having a third machinability higher than the first machinability.

2. The connecting rod of claim 1 wherein:
the second sintered material and the third sintered material are the same.

3. The connecting rod of claim 1 wherein:
the second sintered material and the third sintered material are different.

4. The connecting rod of claim 1 wherein:
the first sintered material has a first zone comprising the first chemical composition and a second zone comprising a fourth chemical composition different from the first chemical composition.

5. The connecting rod of claim 1 wherein:
the first sintered material has a first zone comprising the first density and a second zone comprising a fourth density different from the first density.

6. The connecting rod of claim 1 wherein:
the first density is greater than the second density.

7. The connecting rod of claim 1 wherein:
the first tensile strength is in the range of 1400-1900 MPa and the second tensile strength is in the range of 700-1100 MPa.

8. The connecting rod of claim 1 wherein:
the first sintered material has a hardness in the range of HRC 40-50, and the second sintered material has a hardness in the range of HRC 20-30.

9. The connecting rod of claim 1 wherein:
the material interface is straight.

## Patentansprüche

1. Pleuelstange (10), umfassend:
einen mittigen Schaftabschnitt (12), der ein erstes gesintertes Material mit einer ersten chemischen Zusammensetzung umfasst, wobei das erste gesinterte Material eine erste Zugfestigkeit aufweist und wobei das erste gesinterte Material eine erste Bearbeitbarkeit aufweist;
ein erstes Ende (14), das integral mit dem Schaftabschnitt verbunden ist; und
ein zweites Ende (16), das entgegengesetzt dem ersten Ende integral mit dem Schaftabschnitt verbunden ist, wobei das zweite Ende ein zweites gesintertes Material umfasst, das über das gesamte zweite Ende hin einheitlich ist, wobei das zweite gesinterte Material eine zweite chemische Zusammensetzung aufweist, die sich von der ersten chemischen Zusammensetzung unterscheidet, wobei das zweite gesinterte Material eine zweite Zugfestigkeit aufweist, die geringer als die erste Zugfestigkeit ist, und wobei das zweite gesinterte Material eine zweite Bearbeitbarkeit aufweist, die höher als die erste Bearbeitbarkeit ist,
wobei eine Materialgrenzfläche zwischen dem ersten gesinterten Material des Schaftabschnitts (12) und dem zweiten gesinterten Material des zweiten Endes (16) glatt ist,
wobei das erste gesinterte Material eine erste Dichte aufweist,
wobei das zweite gesinterte Material eine zweite Dichte aufweist, die sich von der ersten Dichte unterscheidet, und
wobei das erste Ende (14) ein drittes gesintertes Material umfasst, das über das gesamte erste Ende hin einheitlich ist, wobei das dritte gesinterte Material eine dritte chemische Zusammensetzung aufweist, die sich von der ersten chemischen Zusammensetzung unterscheidet, wobei das dritte gesinterte Material eine dritte Dichte aufweist, die sich von der ersten Dichte unterscheidet, wobei das dritte gesinterte Material eine dritte Zugfestigkeit aufweist, die geringer als die erste Zugfestigkeit ist, und wobei das dritte gesinterte Material eine dritte Bearbeitbarkeit aufweist, die höher als die erste Bearbeitbarkeit ist.

2. Pleuelstange nach Anspruch 1, wobei
das zweite gesinterte Material und das dritte gesinterte Material gleich sind.

3. Pleuelstange nach Anspruch 1, wobei
das zweite gesinterte Material und das dritte gesinterte Material verschieden sind.

4. Pleuelstange nach Anspruch 1, wobei
das erste gesinterte Material einen ersten Bereich umfasst, der die erste chemische Zusammensetzung aufweist, und einen zweiten Bereich, der eine vierte chemische Zusammensetzung aufweist, die sich von der ersten chemischen Zusammensetzung unterscheidet.

5. Pleuelstange nach Anspruch 1, wobei
das erste gesinterte Material einen ersten Bereich umfasst, der die erste Dichte aufweist, und einen zweiten Bereich, der eine vierte Dichte aufweist, die sich von der ersten Dichte unterscheidet.

6. Pleuelstange nach Anspruch 1, wobei
die erste Dichte größer als die zweite Dichte ist.

7. Pleuelstange nach Anspruch 1, wobei
die erste Zugfestigkeit im Bereich von 1400 - 1900 MPa liegt und die zweite Zugfestigkeit im Bereich von 700 - 1100 MPa liegt.

8. Pleuelstange nach Anspruch 1, wobei
das erste gesinterte Material eine Härte im Bereich von 40 - 50 HRC aufweist und das zweite gesinterte Material eine Härte im Bereich von 20 - 30 HRC aufweist.

9. Pleuelstange nach Anspruch 1, wobei
die Materialgrenzfläche gerade ist.

## Revendications

1. Bielle (10) comprenant :
une section de poutre centrale (12) comprenant un premier matériau fritté ayant une première composition chimique, le premier matériau fritté ayant une première résistance à la traction et le premier matériau fritté ayant une première usinabilité ;
une première extrémité (14) raccordée de manière solidaire à la section de poutre ; et
une seconde extrémité (16) raccordée de manière solidaire à la section de poutre opposée à la première extrémité, la seconde extrémité comprenant un deuxième matériau fritté uniforme sur toute la seconde extrémité, le deuxième matériau fritté ayant une deuxième composition chimique différente de la première composition chimique, le deuxième matériau fritté ayant une deuxième résistance à la traction inférieure à la première résistance à la traction et le deuxième matériau fritté ayant une deuxième usinabilité supérieure à la première usinabilité,
dans laquelle une interface de matériau entre le premier matériau fritté de la section de poutre (12) et le deuxième matériau fritté de la seconde extrémité (16) est lisse,
dans laquelle le premier matériau fritté a une première densité,
dans laquelle le deuxième matériau fritté a une deuxième densité différente de la première densité, et
dans laquelle la première extrémité (14) comprend un troisième matériau fritté uniforme sur toute la première extrémité, le premier matériau fritté ayant une troisième composition chimique différente de la première composition chimique, le troisième matériau fritté ayant une troisième densité différente de la première densité, le troisième matériau fritté ayant une troisième résistance à la traction inférieure à la première résistance à la traction et le troisième matériau fritté ayant une troisième usinabilité supérieure à la première usinabilité.

2. Bielle selon la revendication 1, dans laquelle :
le deuxième matériau fritté et le troisième matériau fritté sont les mêmes.

3. Bielle selon la revendication 1, dans laquelle :
le deuxième matériau fritté et le troisième matériau fritté sont différents.

4. Bielle selon la revendication 1, dans laquelle :
le premier matériau fritté a une première zone comprenant la première composition chimique et une seconde zone comprenant une quatrième composition chimique différente de la première composition chimique.

5. Bielle selon la revendication 1, dans laquelle :
le premier matériau fritté a une première zone comprenant la première densité et une deuxième zone comprenant une quatrième densité différente de la première densité.

6. Bielle selon la revendication 1, dans laquelle :
la première densité est supérieure à la deuxième densité.

7. Bielle selon la revendication 1, dans laquelle :
la première résistance à la traction est de l'ordre de 1 400-1 900 MPa et la deuxième résistance à la traction est de l'ordre de 700-1 100 MPa.

8. Bielle selon la revendication 1, dans laquelle :
le premier matériau fritté a une dureté de l'ordre de HRC 40-50 et le deuxième matériau fritté a une dureté de l'ordre de HRC 20-30.

9. Bielle selon la revendication 1, dans laquelle :
l'interface de matériau est droite.
